# EUROPÄISCHE PATENTSCHRIFT

(11) **EP 0 352 780 B1**
(45) Veröffentlichungstag und Bekanntmachung des Hinweises auf die Patenterteilung: **12.05.1993**
(21) Anmeldenummer: 89113832.3
(22) Anmeldetag: 27.07.1989
(51) Int. Cl.: A47L 23/22, B08B 1/00

(54) **Einrichtung zur Entfernung von Schmutz oder anderen Verunreinigungen**
Device for the removal of dirt or other pollutions
Dispositif pour l'enlèvement de crottes ou des contaminations

(30) Priorität: 28.07.1988 DE 3825617
(43) Veröffentlichungstag der Anmeldung: 31.01.1990
(73) Patentinhaber: Schumacher, W.D., D-22529 Hamburg (DE)
(72) Erfinder: Schumacher, W.D., D-22529 Hamburg (DE)
(74) Vertreter: Meyer, Ludgerus A., Dipl.-Ing.

(56) Entgegenhaltungen:
- EP-A- 0 009 891
- DE-A- 2 028 029
- DE-A- 2 206 414
- DE-U- 7 030 941
- US-A- 4 083 075
- US-A- 4 575 890

## Beschreibung

Die Erfindung betrifft eine Einrichtung zur Entfernung von Schmutz oder anderen Verunreinigungen auf Schuhsohlen oder sonstigen Gegenständen beim Übergang von einem ersten Bereich zu einem zweiten Bereich, mit einer auf dem Boden zwischen den Bereichen stationär angeordneten schmutzundurchlässigen Folie, die mit einer oberseitigen Haft- und Klebeschicht versehen ist, und deren wirksame Fläche in Abständen erneuert wird.

Zur Vermeidung von Verunreinigungen von Reinsträumen, wie z. B. Operationssälen, Intensivstationen oder Räumen bestimmter Fertigungsindustrien, z. B. zur Chip-Herstellung, ist es häufig erforderlich, sogenannte Fußreinigungseinrichtungen vor den Zugängen zu diesen Räumen anzuordnen, um an Schuhsohlen, insbesondere den nur in den Reinsträumen verwendeten Schuhen haftenden Schmutz und Staub vor dem Betreten der Räume zu entfernen.

Die Reinigungseinrichtung kann nicht nur am Eingang eines Reinstraumes angeordnet sein, sie kann auch an dessen Ausgang vorgesehen sein, um Verunreinigungen des Reinstraumes, z. B. durch bestimmte Chemikalien, die im Reinstraum verwendet werden, nicht an die Außenwelt gelangen zu lassen.

Zu diesem Zweck ist es bekannt, vor dem Zugang oder Ausgang eines derartigen Raumes einen Stapel von Kunststoffolien auf dem Boden anzuordnen, deren einzelne Folienblätter jeweils einseitig mit einer Haft- oder Klebeschicht versehen sind. Beim Betreten eines derarigen Folienblattes werden Schmutz oder andere Verunreinigungen durch die Haft- oder Klebeschicht wirkungsvoll von den Schuhsohlen der den Stapel betretenden Person abgenommen. Nach einer gewissen Zeit oder nach Feststellung eines bestimmten Verschmutzungsgrades wird jeweils das oberste Blatt des Folienstapels entfernt, so daß ein neues sauberes Foliienblatt mit nach oben gerichteter Haft- oder Klebeschicht offenliegt und damit die Funktion des Abhebens von Verschmutzungen von Schuhsohlen bewirken kann.

Aus der DE-OS 22 06 414 ist eine Matte aus derartigen, klebrigen Einzelbättern bekannt. Aufgrund der Nachteile, die Matten aus derartig übereinandergestapelten Blätter bei längerem Gebrauch aufweisen, sieht diese Schrift vor, speziell verstärkte Blätter mit einem lamellenförmigen Aufbau zu verwenden. Die Struktur dieser Blätter ist aufwendig und daher teuer.

Die Verwendung eines Folienstapels hat ferner den grundsätzlichen Nachteil, daß eine ständige subjektive Beobachtung des Verschmutzungsgrades der obenliegenden Folie erforderlich ist. Bei einem Ausrausch in zeitlichen Abständen kann dem Benutzungsgrad der Folie nicht ausreichend Rechnung getragen werden. Bei Verwendung eines Folienstapels ist es ferner erforderlich, das jeweils verschmutzte Blatt zu entsorgen. Die ständige Einsatzbereitschaft des Folienstapels ist daher nur eingeschränkt gewährleistet bzw. aufwendig.

Aus dem DE-GM 70 30 941 ist eine Reinigungsvorrichtung mit einem umlaufenden Band bekannt, bei der das Band beim Rücklauf unterhalb der Trittfläche mechanisch über Bürsten und chemisch durch Desinfektion in einem Reinigungsbad gereinigt wird. Die Bewegung des Bandes kann kontinuierlich oder intervalgesteuert erfolgen.

Diese Reinigungseinrichtung erlaubt nur eine Grobreingigung von an Schuhen haftendem Schmutz. Durch den ständigen Umlauf des Bandes bleibt der von den Schuhen abzunehmende Schmutz im System und kann sich immer wieder auf das Band setzen. Der über ein Gitterrost durch das Band in einen Auffangbehälter fallende Schmutz kann leicht aufgewirbelt werden und die Atmosphäre verschmutzen. Ein weiterer Nachteil liegt darin begründet, daß das Band durch das Desinfektionsbad ständig angefeuchtet ist, so daß die Feuchtigkeit sich auf die Schuhsohlen überträgt und daher der Boden des zu betretenden Raumes befeuchtet und leicht beschmutzt wird.

Die US 4 083 075 beschreibt eine handbetätigte Aufnahmevorrichtung zur Aufnahme von Staub oder anderem Abfall vom Boden, wobei eine Folie verwendet ist, die von einer Abgaberolle zu einer Aufnahmerolle geführt ist und durch Niederdrücken der Vorrichtung um eine feste Weglänge vorwärtsbewegt werden kann. Zur Reinigung von Schuhsohlen ist diese Vorrichtung nicht geeignet, da sie insbesondere nicht begehbar ist.

Aus der EP 0 009 891 ist schließlich eine Einrichtung mit einer umlaufenden Fußmatte bekannt, bei der eine Abbürstung und Befeuchtung der unterhalb der Lauffläche zurückgeführten Matte stattfindet, wobei die Matte durch Niederhalterollen an die umlaufende Bürste gedrückt wird.

Der Erfindung liegt daher die Aufgabe zugrunde, eine Einrichtung zur Entfernung von Schmutz und anderen Verunreinigungen von Schuhsohlen oder sonstigen Gegenständen anzugeben, die in Abhängigkeit von der Benutzungshäufigkeit ein selbsttätiges Erneuern der wirksamen Fläche ermöglicht, deren Wartung einfach auszuführen ist, die hohe Reinigungsansprüche erfüllt und einen kostengünstigen Betrieb ermöglicht.

Diese Aufgabe wird durch die im Anspruch 1 angegebene Erfindung gelöst. Vorteilhafte Weiterbildungen der Erfindung sind in Unteransprüchen angegeben.

Gemäß der Erfindung ist eine eine neue Folie enthaltende Abgaberolle vorgesehen, von der die Folie über den Boden unter Bildung der wirksamen Fläche zu einer die benutzte Folie aufnehmenden Aufnahmerolle geführt wird. Der Aufnahmerolle ist eine motorische Antriebseinrichtung zugeordnet, die die Folie in Abhängigkeit von der Benutzungshäufigkeit schrittweise um eine vorgegebene Weglänge vorwärtsbewegt. Ferner ist eine Vorrichtung zur Erfassung der Weglänge vorgesehen, durch die die Antriebseinrichtung bei der Vorwärtsbewegung der Folie steuerbar ist. Schließlich ist der wirksame Fläche eine Schalteinrichtung zur Feststellung der Benutzung der Folie zugeordnet, wobei die Schalteinrichtung eine Vorwärtsbewegung der Folie während der Benutzung verhindert.

In vorteilhafter Weise sind die Abgaberolle und die Aufnahmerolle unter Bildung eines die wirksame Fläche bildenden Zwischenraumes parallel zueinander auf beiden Längsseiten der wirksamen Fläche angeordnet, wobei die Folie durch Führungsrollen auf dem Boden niedergehalten wird.

Alternativ können die Abgaberolle und die Aufnahmerolle parallel nebeneinander auf einer Längsseite der wirksamen Fläche angeordnet sein, wobei die Folie von der Abgaberolle über eine die wirksame Fläche bildende Lauffläche gezogen, über eine Umlenkrolle an der anderen Seite der wirksamen Fläche umgelenkt und unterhalb der Lauffläche zur Aufnahmerolle bzw. in umgekehrter Richtung geführt wird.

Ein Rohrmotor kann im Kern der Aufnahmerolle vorgesehen sein, der unter Berücksichtigung des Durchmessers der Aufnahmerolle ein schrittweises Vorwärtsbewegen der Folie um eine vorgebene Weglänge ermöglicht.

Durch die erfindungsgemäße Einrichtung wird es möglich, die wirksame Fläche einer Einmalfolie in Abhängigkeit vom Benutzungsgrad ständig zu wechseln. Bei jedem Betreten der wirksamen Fläche wird dabei eine Schalteinrichtung betätigt, die nach Verlassen der wirksamen Fläche die Folie um ein Stück zur Aufnahmeseite hin bewegt.

In einer weiteren Ausgestaltung der Erfindung ist vorgesehen, daß die Folie durch eine Abgabeeinrichtung vor der Bewegung über die wirksame Fläche mit der Haft-oder Klebeschicht und/oder mit einer speziellen Beschichtung versehen wird, um eine unbehandelte Folie verwenden zu können oder z.B. antibakterielle oder antistatische Wirkstoffe vor Ort auf die Folie aufbringen zu können.

Die Erfindung ist einfach aufgebaut und erfordert zum Betrieb lediglich das Austauschen der Folienrollen nach deren Verbrauch. Der abgenommene Schmutz ist dauerhaft auf der Folie gebunden und kann durch das Aufwickeln der Folie nicht mehr in die Atmosphäre gelangen. Die Einrichtung arbeitet selbsttätig in Abhängigkeit vom Benutzungsgrad, so daß ständig eine ausreichende Reinigungsfunktion vorliegt. Durch Einstellung des Vorschubs beim Vorwärtsbewegen der Folie kann die Stärke der Reinigungswirkung an die Erfordernisse angepaßt werden. Der Bewegungsweg der Folie bei der Vorwärtsbewegung kann unabhängig von der Dicke der Aufnahmerolle eingestellt werden.

Die Erfindung wird nachstehend anhand eines Ausführungsbeispiels näher erläutert. Es zeigen:
- Fig. 1: eine perspektivische Ansicht einer erfindungsgemäßen Einrichtung,
- Fig. 2: eine Aufsicht auf eine Einrichtung nach Fig. 1,
- Fig. 3: eine teilgeschnittene Ansicht einer Aufrolleinrichtung,
- Fig. 4: eine andere Ausführungsform der Erfindung,
- Fig. 5: eine Einrichtung zur Beschichtung der Folie.

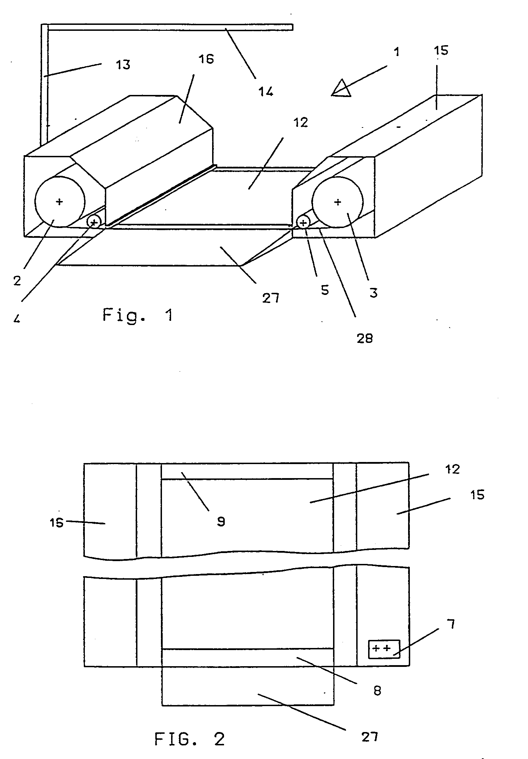

Um Einblick in die erfindungsgemäße Einrichtung nach Fig. 1 nehmen zu können, ist die Vorderwand der Einrichtung entfernt. Die Reinigungseinrichtung 1 besteht aus zwei seitlichen Kästen 15 und 16, in denen jeweils eine stirnseitig gelagerte Rolle vorgesehen ist, nämlich eine Abgaberolle 3, die eine neue, saubere Folie aufweist, und eine Aufnahmerolle 2, auf die die verschmutzte Folie aufgerollt werden kann. Die Folie wird von der Abgaberolle 3 unterhalb einer Niederhalterolle 5 über die Trittfläche 12 gezogen und auf der gegenüberliegenden Seite der Trittfläche unterhalb der Niederhalterolle 4 zur Aufnahmerolle 2 geführt, auf der sie aufgewickelt wird. Die über die Trittfläche 12 geführte Folie 28 ist vorzugsweise eine einseitig haftbeschichtete Polyethylen-Folie, deren Haftbeschichtung insbesondere als Acrylat-Kleber ausgebildet ist. Derartige Folien sind als Verpackungsfolien für empfindliche Geräte bekannt. Die Dicke der Folie beträgt etwa 10 bis 100µ. Die Breite der Trittfläche beträgt etwa 35 - 100 cm und deren Länge etwa 1,0 - 1,20 m, um zu gewährleisten, daß eine Person, die die Trittfläche betritt, auf jeden Fall mindestens einmal mit beiden Füßen auf die Trittfläche tritt.

Vorzugsweise sind die Abgabe- und/oder Aufnahmerollen 2, 3 als Schnellwechselrollen ausgeführt. Dabei liegen die Enden der Rollen bzw. deren Aufnahmeachsen in nach oben offenen Aufnahmelagern, wobei die Aufnahmerolle an einem Ende einen angetriebenen Zahnkranz aufweist. Nach Benutzung können die Rollen sehr schnell von ihrer Aufnahmeachse abgenommen und durch eine neue Rolle ersetzt werden.

Die Niederhalterollen 4 und 5 sind entlang ihrer Länge vorzugsweise im Durchmesser sich ändernd ausgeführt, um ein seitliches Planziehen der Folie zu ermöglichen.

Um keine Stolperkante vor der Trittfläche entstehen zu lassen, ist eine Rampe 27 vorgesehen. Das Vorwärtsbewegen der Folie in inkrementalen Schritten kann durch Betätigen von Druckschaltern unterhalb der Lauffläche 12 ausgelöst werden. Die Betätigung kann aber auch durch einen Drehkranz 14, der über einen Drehstab 13 einen Schalter betätigt, ausgelöst werden, jeweils, nachdem eine Person die Trittfläche 12 verlassen hat. Eine weitere Möglichkeit der Betätigung besteht in der Verwendung einer Lichtschranke.

Fig. 2 zeigt die erfindungsgemäße Einrichtung in Aufsicht. Hier sind zwei Führungen 8 und 9 dargestellt, unterhalb der die Kanten der über die Trittfläche 12 geführten Folie geführt sind. An der Oberseite des Gehäuseteiles 15 ist vorzugsweise ein Schaltfeld 7 vorgesehen, das der Einschaltung und Kontrolle der Einrichtung dient.

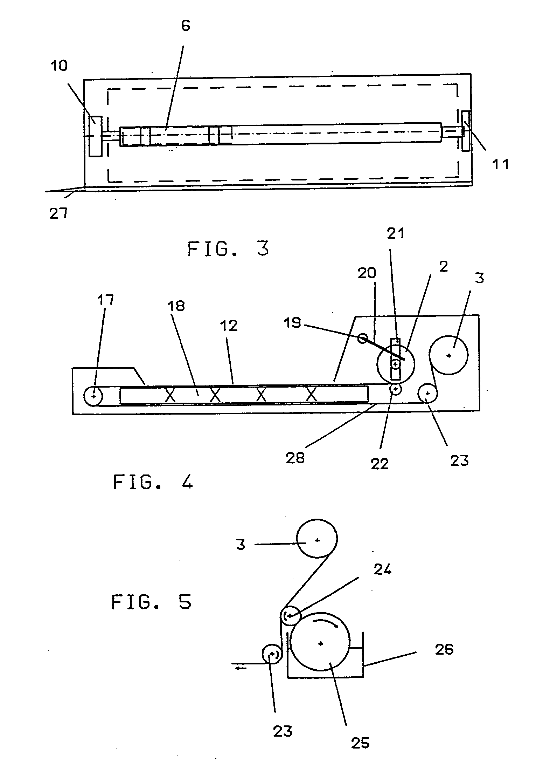

Fig. 3 zeigt ein Detail einer Antriebseinrichtung, mit deren Hilfe die Aufnahmerolle betätigt werden kann. Die die Trittfläche verlassende Folie wird in dieser Ausführungsform auf der Aufnahmerolle durch einen im Kern der Rolle angeordneten Rohrmotor 6 aufgerollt. Die Rolle ist über die Lager 10 und 11 im Gehäuse abgestützt. Rohrmotoren sind üblicherweise Schrittmotoren, die durch ein elektrisches Signal um einen bestimmten kleinen Winkelschritt bewegt werden können. Nach einer Betätigung der die Bewegung der Folie auslösenden Schaltmittel, z.B. durch Druckschalter, Drehkranz oder Lichtschranke, wird dem Rohrmotor 6 eine elektrische Spannung zugeführt, so daß die Folie um ein gewüschtes Stück über die Trittfläche gezogen wird. Die Schrittweite kann in Abhängigkeit vom Durchmesser der Aufnahmerolle durch einen geeigneten Fühler eingestellt werden, so daß die Folie vom Beginn bis zum Ende bei jeder Betätigung um die gleiche Schrittlänge vorwärtsbewegt wird.

Anstelle eines Rohrmotors kann ein unmittelbarer Antrieb der Folie vorgesehen sein, indem z.B. die Folie zwischen zwei angetriebenen Walzen geführt wird. In einer noch weiteren Ausführungsform kann die Folie auch über Stachelwalzen geführt werden, die jeweils in den Rand der Folie eingreifen und ein schrittweises Vorwärtsbewegen der Folie ermöglichen.

Die Erfassung der Schrittweite bei der Vorwärtsbewegung der Folie erfolgt vorzugsweise durch Erfassen des Drehwinkels bzw. der Zahl der Umdrehungen der Niederhalterolle 4.

Bei Einschaltung des Antriebs kann die Bewegung der Folie daher um eine gewünschte, vorzugsweise einstellbar gewählte Strecke erfolgen. Der Antrieb kann nach jeder Benutzung oder nach einer wählbaren Zahl von Benutzungen eingeschaltet werden. Vorzugsweise ist verhindert, daß die Einschaltung während der Benutzung erfolgt.

Fig. 4 zeigt eine weitere Ausführungsform der Erfindung. Hier sind sowohl die Abgaberolle 3 als auch die Aufnahmerolle 2 auf einer Seite der Trittfläche angordnet, während auf der gegenüberliegenden Seite der Trittfläche lediglich eine Umlenkrolle 17 vorgesehen ist. Von der Abgaberolle 3 wird die Folie 28 um eine Umlenkrolle 17 umgelenkt und oberhalb der Trittfläche wieder zurückgeführt und dann auf der Aufnahmerolle 2 aufgewickelt. Die Trittfläche weist ein Schaltfeld 18 auf, das z.B. als piezoelektrische, kapazitive oder induktive Schaltglieder ausgebildet sein kann, die in der Trittfläche verteilt sind.

Die Aufnahmerolle 2 stützt sich auf eine Druckwalze 22 ab, die unterhalb der Folie und der Aufnahmerolle 2 angeordnet ist. Die Aufnahmerolle 2 ist mit ihrer Achse in einer Längsführung 21 gelagert, so daß sie sich durch Abstützung an der Druckwalze 22 in Abhängigkeit vom Durchmesser der Rolle 2 vertikal nach oben verschieben kann. Durch das ständige Größerwerden der Aufnahmerolle 2 verlagert sich dadurch das Ende der Achse der Aufnahmerolle 2 in vertikaler Richtung, so daß ein darauf abgestützter Hebel 20 mit angehoben wird. Der Hebel 20 wirkt auf ein Potentiometer 19, dessen Stellung zur Steuerung der Schrittweite des Antriebsmotors der Aufnahmerolle verwendbar ist. Auch in dieser Ausführungsform ist die Schrittweite der Vorwärtsbewegung der Folie über die Trittfläche nach einer Benutzung unabhängig vom Durchmesser der Aufnahmerolle 2.

Bei dieser Ausführungsform der Erfindung steht keine der Umlenk- oder Niederhalterollen 17, 22 und 23 in Kontakt mit der beschichteten Oberfläche der Folie. Damit wird eine Verschmutzung dieser Rollen wirksam verhindert. Bei der Ausführungsform nach Fig. 1 kann es notwendig sein, die Niederhalterollen 4 und 5, die in Kontakt mit der Haft- oder Klebefläche der Folie stehen, zur Vermeidung einer Verschmutzung mit einer Silikon-Oberfläche zu versehen.

In einer ergänzenden Ausführungsform gemäß Fig. 5 ist vorgesehen, daß die Folie vor Ort mit einer zusätzlichen Beschichtung versehen werden kann. Dazu ist ein Behälter 26 vorgesehen, in dem sich eine Flüssigkeit befindet, die auf die Folie aufgebracht werden soll. In dem Behälter ist eine Aufnahmewalze 25 eingetaucht, die bei Drehung auf ihrer Oberfläche die im Behälter 26 vorhandene Flüssigkeit aufnimmt. Die Aufnahmewalze 25 gibt die aufgenommene Flüssigkeit an eine Übertragwalze 24 ab, die an der Folie entlang rollt und dabei die von der Aufnahmewalze abgenommene Flüssigkeit auf die Folie überträgt. Die aufzubringende Flüssigkeit kann z.B. eine antibakterielle oder antistatische Flüssigkeit sein, die zusätzlich auf die Klebeschicht aufgetragen werden kann. Es ist jedoch auch möglich, die Haft- oder Klebeschicht selbst auf die Folie vor Ort zu übertragen, wodurch es nicht notwendig ist eine bereits werkseitig präparierte Folie zu verwenden.

Die gesamte Einrichtung kann auf dem Fußboden vor einem Reinstraum angeordnet werden, sie kann jedoch auch ortsfest im Estrich untergebracht werden, so daß die Trittfläche stufenfrei begehbar ist. Damit jeweils nur eine Person die Trittfläche betreten kann und nach Verlassen der Trittfläche eine kurze Zeit verbleibt, in der die Folie vorwärtsbewegt werden kann, sollte eine Steuerung des Zugangs erfolgen, indem z. B. Lichtzeichen vorgesehen werden oder ein absperrbarer Drehkranz der Einrichtung vorgesetzt ist. Es sollte ferner eine optische und/oder akustische Anzeige für das Ende einer Rolle vorgesehen sein.

Die erfindungsgemäße Einrichtung kann nicht nur zur Entfernung von Schmutz oder anderen Verunreinigungen von Schuhsohlen verwendet werden, sondern kann ebenfalls der Entstaubung von Gegenständen in einem Fertigungsprozeß dienen, z. B. von Kugeln für Kugellager, die über die schräg angestellte und gegebenenfalls zusätzlich gerüttelte erfindungsgemäße Einrichtung abrollen. Allgemein läßt sich die Erfindung für alle Entstaubungsprobleme einsetzen, bei denen die Entstaubung über eine Haftfolie erfolgt und eine ständige Erneuerung der Folie erforderlich ist.

### Bezugszeichenliste

- 1: Entstaubungseinrichtung
- 2: Aufnahmerolle
- 3: Abgaberolle
- 4: Niederhalterolle
- 5: Niederhalterolle
- 6: Rohrmotor
- 7: Schaltfeld
- 8: Führung
- 9: Führung
- 10: Lager
- 11: Lager
- 12: Trittfläche
- 13: Drehstab
- 14: Schranke
- 15: rechtes Gehäuse
- 16: linkes Gehäuse
- 17: Umlenkrolle
- 18: Schaltfeld
- 19: Potentiometer
- 20: Hebel
- 21: Längsführung
- 22: Druckwalze
- 23: Niederhalterolle
- 24: Übertragwalze
- 25: Aufnahmewalze
- 26: Behälter
- 27: Rampe
- 28: Folie

## Patentansprüche

1. Einrichtung zur Entfernung von Schmutz oder anderen Verunreinigungen auf Schuhsohlen oder sonstigen Gegenständen beim Übergang von einem ersten Bereich zu einem zweiten Bereich, mit einer auf dem Boden zwischen den Bereichen stationär angeordneten schmutzundurchlässigen Folie, die mit einer oberseitigen Haft- und Klebeschicht versehen ist, und deren wirksame Fläche in Abständen erneuert wird, dadurch gekennzeichnet, daß eine eine neue Folie (28) enthaltende Abgaberolle (3) vorgesehen ist, von der die Folie über den Boden unter Bildung der wirksamen Fläche zu einer die benutzte Folie aufnehmenden Aufnahmerolle (2) geführt wird, daß der Aufnahmerolle eine motorische Antriebseinrichtung zugeordnet ist, die die Folie in Abhängigkeit von der Benutzungshäufigkeit schrittweise um eine vorgegebene Weglänge vorwärtsbewegt, daß eine Vorrichtung zur Erfassung der Weglänge vorgesehen ist, durch die die Antriebseinrichtung bei der Vorwärtsbewegung der Folie steuerbar ist, und daß der wirksamen Fläche eine Schalteinrichtung (18) zur Feststellung der Benutzung der Folie zugeordnet ist, wobei die Schalteinrichtung eine Vorwärtsbewegung der Folie während der Benutzung verhindert.

2. Einrichtung nach Anspruch 1, dadurch gekennzeichnet, daß die Abgaberolle (3) und die Aufnahmerolle (2) unter Bildung eines die wirksame Fläche bildenden Zwischenraumes parallel zueinander auf beiden Längsseiten der wirksamen Fläche angeordnet sind, wobei die Folie (28) durch Führungsrollen (4, 5) auf dem Boden niedergehalten wird.

3. Einrichtung nach Anspruch 1, dadurch gekennzeichnet, daß die Abgaberolle (3) und die Aufnahmerolle (2) parallel nebeneinander auf einer Längsseite der wirksamen Fläche angeordnet sind und daß die Folie (28) von der Abgaberolle über eine die wirksame Fläche bildende Trittfläche gezogen, über eine Umlenkrolle (17) an der anderen Seite der wirksamen Fläche umgelenkt und unterhalb der Trittfläche zur Aufnahmerolle (2) geführt wird.

4. Einrichtung nach Anspruch 1, dadurch gekennzeichnet, daß die Abgaberolle (3) und die Aufnahmerolle (2) parallel nebeneinander auf einer Längsseite der wirksamen Fläche angeordnet sind und daß die Folie (28) von der Abgaberolle (3) unterhalb der die wirksame Fläche bildenden Trittfläche gezogen und über eine Umlenkrolle (17) an der anderen Längsseite der wirksamen Fläche über die Trittfläche zur Aufnahmerolle (2) geführt wird.

5. Einrichtung nach Anspruch 1, dadurch gekennzeichnet, daß ein Rohrmotor (6) im Kern der Aufnahmerolle (2) vorgesehen ist, der unter Berücksichtigung des Durchmessers der Aufnahmerolle ein schrittweises Vorwärtsbewegen der Folie um eine vorgegebene Weglänge ermöglicht.

6. Einrichtung nach einem oder mehreren der vorhergehenden Ansprüche, dadurch gekennzeichnet, daß die Folie auf ihrer wirksamen Oberfläche durch eine Übertragungseinrichtung (24, 25, 26) vor der Bewegung über die wirksame Fläche mit einer Behandlungsschicht versehen wird. (Fig. 5)

7. Einrichtung nach Anspruch 6, dadurch gekennzeichnet, daß die Behandlungsschicht eine Haft- oder Klebeschicht ist.

8. Einrichtung nach Anspruch 6 oder 7, dadurch gekennzeichnet, daß die Behandlungsschicht als antibakterielle und/oder antistatische Beschichtung ausgebildet ist.

## Claims

1. Device for removing dirt or other impurities on shoe soles or other objects with a transition from a first area to a second area and with a foil which is impervious to dirt, which is disposed so that it is stationary on the ground between the areas and which is provided with an adhesive layer on the upper side and the active surface of which is renewed at intervals, characterized in that a supply roll (3) containing a new foil (28) is provided, from which the foil is run over the ground, whilst forming the active surface, to a take-up roll (2) which takes up the used foil, in that a motor drive unit is associated with the take-up roll which moves the foil forwards by a preset travel length in steps according to the frequency of use, in that a device is provided for detecting the travel length, through which the drive unit can be controlled during the forwards movement of the foil and in that a switching unit (18) is associated with the active surface for determining the use of the foil, whereby the switching unit prevents a forwards movement of the foil during use.

2. Device according to claim 1, characterized in that the supply roll (3) and the pick-up roll (2) are disposed parallel to each other on both longitudinal sides of the active surface whilst forming an intermediate space which forms the active surface, whereby the foil (28) is held down on the ground by guide rolls (4,5).

3. Device according to claim 1, characterized in that the supply roll (3) and the pick-up roll (2) are disposed parallel next to each other on a longitudinal side of the active surface and in that the foil (28) is drawn by the supply roll over a tread surface forming the active surface, is guided over a deflection roll (17) at the other side of the active surface and run under the tread surface to the pick-up roll (2).

4. Device according to claim 1, characterized in that the supply roll (3) and the pick-up roll (2) are disposed parallel next to each other on a longitudinal side of the active surface and in that the foil (28) is drawn by the supply roll (3) under the tread surface forming the active surface and run over a deflection roll (17) at the other longitudinal side of the active surface over the tread surface to the take-up roll (2).

5. Device according to claim 1, characterized in that a tubular motor (6) is provided in the core of the pick-up roll (2), which permits a forwards movement of the foil in steps through a preset travel length whilst taking into account the diameter of the pick-up roll.

6. Device according to one or several of the preceding claims, characterized in that the foil is provided with a treatment layer on its active surface by a transfer unit (24,25,26) before the movement over the active surface (Fig.5).

7. Device according to claim 6, characterized in that the treatment layer is an adhesive layer.

8. Device according to claim 6 or 7, characterized in that the treatment layer is constructed as an antibacterial and/or antistatic coating.

## Revendications

1. Dispositif pour éliminer les saletés ou autres impuretés de semelles de chaussures ou d'autres objets lors du passage d'une première zone à une seconde zone, comportant une feuille imperméable aux saletés qui est disposée sur le sol de façon fixe, entre ces zones, qui est pourvue, sur sa face supérieure, d'une souche adhésive et collante et dont la surface active est renouvelée à intervalles réguliers, caractérisé en ce qu'il est prévu un rouleau distributeur (3) contenant une nouvelle feuille (28) et à partir duquel la feuille est amenée, au-dessus du sol, en formant la surface active, vers un rouleau récepteur (2) recevant la feuille utilisée, en ce qu'il est prévu, associé au rouleau récepteur, un dispositif d'entraînement par moteur qui fait avancer la feuille pas à pas, sur une longueur prédéfinie, en fonction de la fréquence d'utilisation, en ce qu'il est prévu un dispositif pour la détection de cette longueur, grâce auquel le dispositif d'entraînement est apte à être commandé lors du mouvement d'avance de la feuille, et en ce qu'il est prévu, associé à la surface active, un dispositif de manoeuvre (18) destiné à constater l'utilisation de la feuille, ce dispositif de manoeuvre enpêchant un mouvement d'avance de la feuille pendant l'utilisation.

2. Dispositif selon la revendication 1, caractérisé en ce que le rouleau distributeur (3) et le rouleau récepteur (2), en formant un espace intermédiaire qui définit la surface active, sont disposés parallèlement l'un par rapport à l'autre sur les deux côtés longitudinaux de la surface active, la feuille (28) étant maintenue abaissée sur le sol par des rouleaux de guidage (4, 5).

3. Dispositif selon la revendication 1, caractérisé on ce que le rouleau distributeur (3) et le rouleau récepteur (2) sont disposés parallèlement l'un à côté de l'autre, sur un côté longitudinal de la surface active, et en ce que la feuille (28) est tirée à partir du rouleau distributeur sur une surface formant marche définissant la surface active, est déviée par l'intermédiaire d'un rouleau de déviation (17), de l'autre côté de la surface active, et guidée au-dessous de la surface formant marche vers le rouleau récepteur (2).

4. Dispositif selon la revendication 1, caractérisé en ce que le rouleau distributeur (3) et le rouleau récepteur (2) sont disposés parallèlement l'un à côté de l'autre, sur un côté longitudinal de la surface active, et en ce que la feuille (28) est tirée à partir du rouleau distributeur (3) au-dessous de la surface formant marche définissant la surface active, et est guidée, par l'intermédiaire d'un rouleau de déviation (17) prévu sur l'autre côté longitudinal de la surface active, au-dessus de la surface formant marche, vers le rouleau récepteur (2).

5. Dispositif selon la revendication 1, caractérisé en ce qu'il est prévu, dans le mandrin du rouleau récepteur (2), un moteur tubulaire (6) qui permet à la feuille d'avancer pas à pas sur une longueur prédéfinie, en tenant compte du diamètre du rouleau récepteur.

6. Dispositif selon l'une au moins des revendications précédentes, caractérisé en ce que, avant d'être déplacée, la feuille est pourvue, sur sa surface active, d'une couche de traitement par un dispositif de transfert (24, 25, 26) (fig. 5).

7. Dispositif selon la revendication 6, caractérisé en ce que la couche de traitement est une couche adhésive ou collante.

8. Dispositif selon la revendication 6 ou 7, caractérisé en ce que la couche de traitement est connue comme un revêtement anti-bactéries et/ou antistatique.
